# EUROPEAN PATENT APPLICATION

(11) **EP 3 848 165 A1**
(43) Date of publication of application: **14.07.2021**
(21) Application number: 21150032.7
(22) Date of filing: 04.01.2021
(51) Int. Cl.: B25J 9/16

(54) **PATH GENERATING DEVICE, CONTROL DEVICE, INSPECTION SYSTEM, PATH GENERATING METHOD, AND PROGRAM**

(30) Priority: 10.01.2020 JP 2020002881
(71) Applicant: MITSUBISHI HEAVY INDUSTRIES, LTD., Chiyoda-ku, Tokyo 100-8332 (JP)
(72) Inventor: ONODERA, Sho, Tokyo, 100-8332 (JP); KANAZAWA, Hiroyuki, Tokyo, 100-8332 (JP); ARORA, Rohit, Tokyo, 100-8332 (JP)
(74) Representative: Studio Torta S.p.A.

(57) **Abstract**

Problem

Provided is a path generating device that is capable of preventing a robot from impinging upon an obstacle.

Solving Means

A path generating device is configured to generate a path for a robot formed by connecting a plurality of units that are each bendable to have a desired single curvature, and the path generating device includes: an analysis unit configured to output position posture information indicating a position and a posture of the robot corresponding to an operation amount, using a robot model with which the position and the posture are able to be simulated in a virtual space; a generating unit configured to generate a path extending from a predetermined entry position to a target position in the virtual space; and a specification unit configured to specify an operation amount for making the robot model advance along the path, while making a position of a connection portion of each of the units of the robot model match the path.

## Description

### Technical Field

The present disclosure relates to a path generating device, a control device, an inspection system, a path generating method, and a program.

### Background Art

Robots used for inspection in a narrow portion have been known. Such robots have, for example, an articulated structure and the like and are configured to be long and bendable, to be capable of passing through a narrow portion to reach the final destination. Hereinafter, a robot having such a configuration may also be referred to as "long flexible robot".

Patent Document 1 discloses an information processing device for calibrating a robot using a camera image. The information processing device adjusts control parameters based on a difference between a virtual image and a real image.

### Citation List

### Patent Literature

Patent Document 1: JP 2015-024480 A

### Summary of Invention

### Technical Problem

The long flexible robot described above has characteristics largely differing from those of conventional highly rigid robots. Thus, making the long flexible robot move along a path provided by a conventional simulation mainly implemented by calculations is likely to involve a large amount of control error. Such a control error may result in the long flexible robot impinging upon an obstacle for example.

An object of the present disclosure is to provide a path generating device that is capable of preventing a long flexible robot from impinging upon an obstacle.

### Solution to Problem

According to one aspect of the present disclosure, a path generating device is configured to generate a path for a robot formed by connecting a plurality of units that are each bendable to have a desired single curvature, and the path generating device includes: an analysis unit configured to output position posture information indicating a position and a posture of the robot corresponding to an operation amount, using a robot model with which the position and the posture are able to be simulated in a virtual space; a generating unit configured to generate a path extending from a predetermined entry position to a target position in the virtual space; and a specification unit configured to specify an operation amount for making the robot model advance along the path, while making a position of a connection portion of each of the units of the robot model match the path.

The generating unit determines whether the robot model advancing along the path in response to the operation amount input comes into contact with an obstacle model, based on the position posture information, and, upon determining that the contact occurs, modifies the path to prevent the robot model from coming into contact with the obstacle model.

### Advantageous Effects of Invention

According to the aspect described above, the robot can be prevented from impinging upon an obstacle.

### Brief Description of Drawings

FIG. 1 is a diagram illustrating an overall configuration of an inspection system according to an embodiment.
FIG. 2 is a diagram illustrating a configuration of an inspection device according to the embodiment.
FIG. 3 is a diagram illustrating a configuration of the inspection device according to the embodiment.
FIG. 4 is a diagram illustrating a configuration of the inspection device according to the embodiment.
FIG. 5 is a diagram illustrating a configuration of the inspection device according to the embodiment.
FIG. 6 is a diagram illustrating a configuration of the inspection device according to the embodiment.
FIG. 7 is a diagram illustrating a configuration of the inspection device according to the embodiment.
FIG. 8 is a diagram illustrating a hardware configuration of a control device according to the embodiment.
FIG. 9 is a diagram illustrating a functional configuration of a CPU according to the embodiment.
FIG. 10 is a diagram illustrating a processing flow of the CPU according to the embodiment.
FIG. 11 is a diagram illustrating an example of data handled by the CPU according to the embodiment.
FIG. 12 is a diagram illustrating an example of data handled by the CPU according to the embodiment.
FIG. 13 is a diagram illustrating an example of data handled by the CPU according to the embodiment.
FIG. 14 is a diagram illustrating an example of data handled by the CPU according to the embodiment.
FIG. 15 is a diagram illustrating operational effects obtained by a path generating device according to the embodiment.
FIG. 16 is a diagram illustrating a functional configuration of a CPU according to an embodiment.
FIG. 17 is a diagram illustrating a processing flow of the CPU according to the embodiment.
FIG. 18 is a diagram illustrating a processing flow of a CPU according to an embodiment.

### Description of Embodiments

### First Embodiment

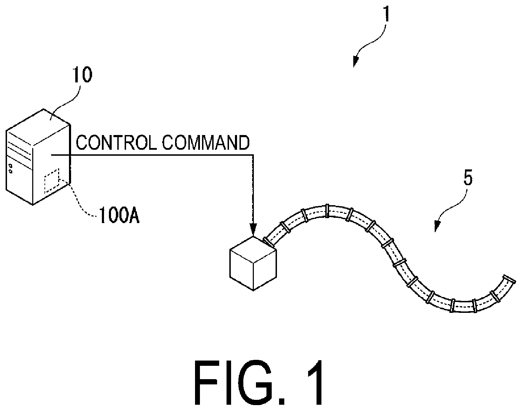

A path generating device according to a first embodiment and an inspection system including the same will be described below with reference to FIGS. 1 to 15.

### Overview of Overall Configuration of Inspection System

FIG. 1 is a diagram illustrating an overall configuration of an inspection system according to the first embodiment.

This inspection system 1 illustrated in FIG. 1 is used for inspection of a narrow portion (inside a gas turbine, a steam turbine, or the like for example).

As illustrated in FIG. 1, the inspection system 1 includes a control device 10 and an inspection device 5. The control device 10 functions as a path generating device 100A. Details of the control device 10 and the path generating device 100A will be described later.

Note that, in the present embodiment, the path generating device 100A is described in an aspect of being, as a function, embedded in the control device 10, but other embodiments are not limited to this aspect. In other embodiments, for example, the path generating device 100A may be in an aspect to be provided separately from the control device 10. In this case, the path generating device 100A outputs an operation amount to the control device 10.

### Configuration of Inspection Device

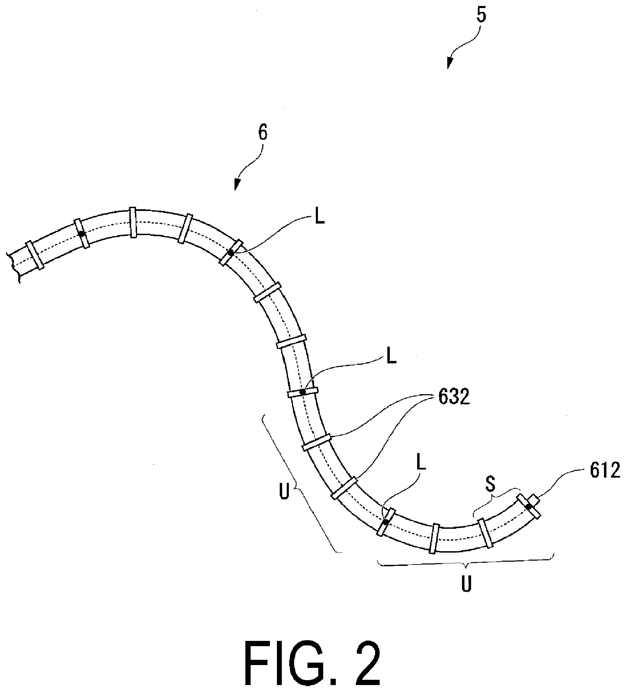

First of all, the inspection device 5 will be described in detail with reference to FIGS. 2 to 7.

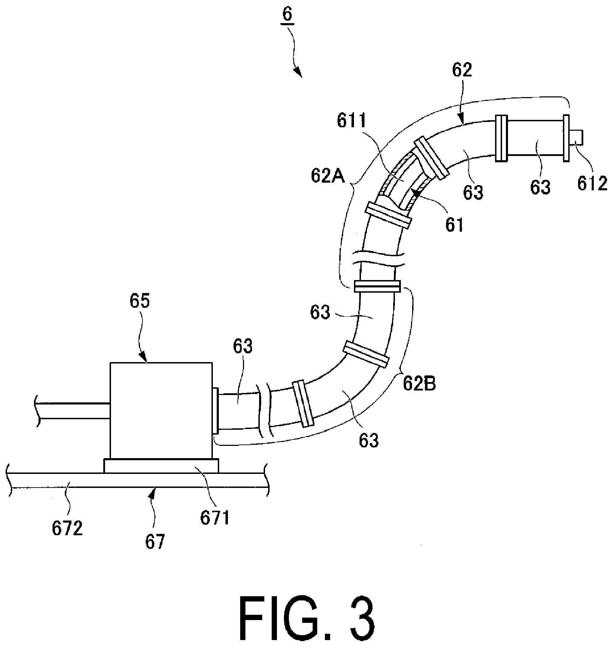

The inspection device 5 is a device capable of checking inside an inspection target (such as a gas turbine) from the outside. The inspection device 5 of the present embodiment includes an inspection cable 61 (FIG. 3) and a long flexible robot 6.

First of all, an overall configuration of the long flexible robot 6 will be described with reference to FIG. 2.

The long flexible robot 6 is configured to include a plurality of units U connected in series. The units U each have an articulated structure to be bendable at a plurality of sections and thus is capable of bending in a desired direction within a predetermined range (for example, in a range up to 90°). Still, based on a structure described below, each unit U is only capable of bending with a single curvature, meaning that each unit U is incapable of deforming into a shape with two curvatures (an S shape for example).

The units U are connected in series via connection portions L (portions illustrated as black points in FIG. 2). In the present embodiment, each unit U includes three nodes S, for example. Flanges 632 define boundaries between the units U (connection portions L) and between the node S.

A sensor 612 provided at the distal end of the inspection cable 61 (FIG. 3) extends out from the distal end of the long flexible robot 6.

Next, a configuration of the inspection cable 61 and the long flexible robot 6 will be described in detail with reference to FIGS. 3 to 7.

The inspection cable 61 includes a highly flexible cable body 611 and the sensor 612. The cable body 611 is bendable in any direction intersecting with a cable extending direction, which is a direction in which the cable body 611 extends, in response to an operation on an operating unit (not illustrated) by an operator, and the cable body 611 is a member separately provided from a tube 62 and is detachably attached to the tube 62. The cable body 611 is provided with an actuator (not illustrated) for cable movement, so as to be capable of being driven independently from the long flexible robot 6.

The sensor 612 is fixed to the distal end of the cable body 611. The tube 62 (described later) incorporates the sensor 612 and the cable body 611. The sensor 612 of the present embodiment is a camera capable of capturing an image inside an inspection target. Captured image data such as a video and an image captured by the sensor 612 is sent to a camera image monitor or the like through a cable extending from an end portion (rear end) on a side of the cable body 611 where the sensor 612 is not provided. As the inspection cable 61 according to the present embodiment, for example, a borescope (industrial endoscope) for observation and inspection of a deep portion that is not directly visible is used.

The inspection cable 61 may be any cable with a bendable structure and, for example, may be a serpentine robot with an articulated structure provided by a plurality of highly flexible members connected to each other.

The sensor 612 is not limited to a camera as in the present embodiment. For example, the sensor 612 according to the present embodiment may be: a sensor 612 having a dimension measuring function (for example, three-dimensional phase measurement); or a sensor 612 capable of measuring temperature or the presence or absence of scratches.

The long flexible robot 6 includes the tube 62, a posture actuator 65, and an advancement/retraction actuator 67.

As illustrated in FIG. 3, a hollow portion into which the inspection cable 61 can be inserted is formed inside the tube 62. The tube 62 is flexible. The tube 62 has an articulated structure to be bendable at a plurality of sections. Thus, the tube 62 is capable of bending in any direction intersecting with a tube extending direction which is a direction in which the tube 62 extends. Note that each of the joint portions of the tube 62 is preferably a structured to be easily bendable but not to be easily twistable or compressible. The tube 62 has an outer diameter (10 mmcp for example), enabling the tube 62 to be inserted into a narrow portion of the inspection target. The cable body 611 is detachably attached to the tube 62. The tube 62 of the present embodiment includes a plurality of tube bodies 63 connected to each other. One tube body 63 corresponds to one node S illustrated in FIG. 2.

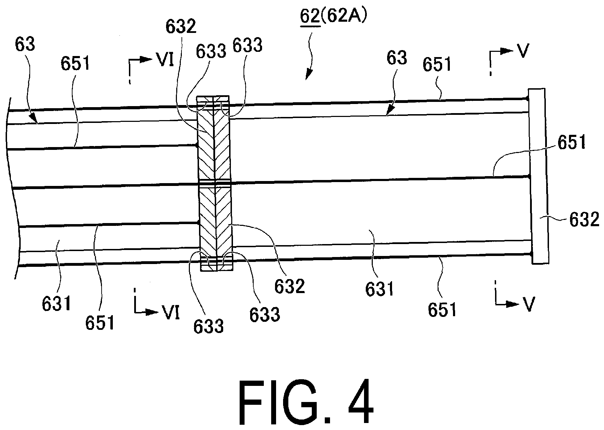

The plurality of tube bodies 63 are arranged side by side in the extending direction of the tube body 63 and are connected to each other. As illustrated in FIG. 4, the tube body 63 includes: a cylindrical portion 631 having both ends open; and the flanges 632 that protrude outward in the radial direction from the outer circumferential surfaces at both ends of the cylindrical portion 631. The cylindrical portion 631 has a cylindrical shape into which the inspection cable 61 can be inserted inside. A plurality of slits (not illustrated) are formed in the cylindrical portion 631, for example, to enable the cylindrical portion 631 to be bent in any direction. The flange 632 is formed integrally with the cylindrical portion 631 and has an annular shape.

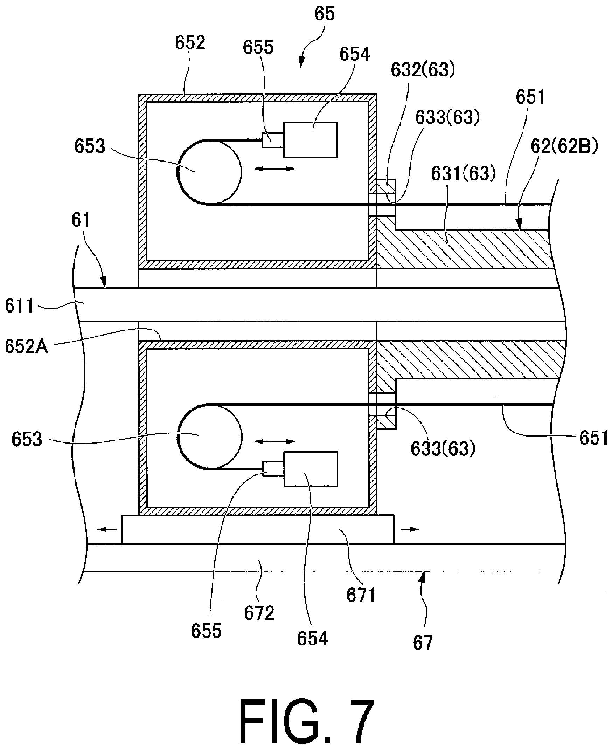

As illustrated in FIG. 3, the posture actuator 65 can adjust the posture of the tube 62. Here, the posture of the tube 62 comprises the position and orientation of the distal end of the tube 62 on a virtual plane that intersects the tube extending direction. The posture actuator 65 of the present embodiment is fixed to the base end (rear end) of the tube 62. As illustrated in FIG. 7, the posture actuator 65 includes a plurality of wires 651, a housing 652, a pulley 653, a wire drive unit 654, and a wire load detection unit 655.

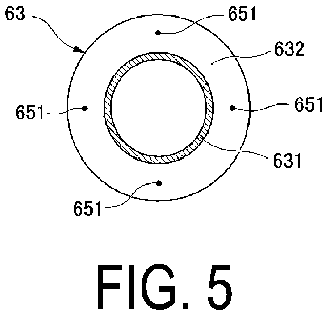

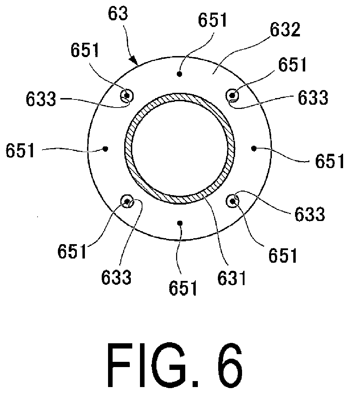

As illustrated in FIG. 4, the plurality of wires 651 (four wires, for example, in the present embodiment) are provided for each tube body 63. The distal end of the wire 651 is fixed to the flange 632 located on the distal end side of the tube body 63. As illustrated in FIG. 5, the wires 651 are fixed to a single flange 632 while being separated from each other with their phases shifted from each other (e.g., by 90 degrees). Furthermore, the wires 651 are disposed with their phases differing between adjacent tube bodies 63. Specifically, as illustrated in FIG. 6, the fixed positions of the wires 651 on the other tube body 63 disposed at the base end side are shifted by 45 degrees, for example, from those on one adjacent tube body 63 on the distal end side. Thus, wire insertion holes 633 are formed in the flange 632 of the tube body 63 on the base end side, for inserting the wires 651 fixed to the tube body 63 disposed on the distal end side more than the tube body 63 on the base end side. This means that the number of wire insertion holes 633 formed increases in the tube body 63, as a disposed position is closer to the position closest to the base end.

As illustrated in FIG. 7, the housing 652 is fixed to the base end of the tube 62. The housing 652 accommodates one ends of the wires 651. The housing 652 is provided with a housing through hole 652A into which the cable body 611 protruding from the base end of the tube 62 can be inserted. The housing through hole 652A is formed through the housing 652.

The pulley 653 is rotatably attached in the housing 652. With the pulley 653, the extending direction of the wire 651 is reversed within the housing 652. The pulley 653 is provided for each wire 651. In other words, one pulley 653 is provided for one wire 651. A plurality of the pulleys 653 are provided while being separated from each other to surround the housing through hole 652A.

The wire drive unit 654 is fixed within the housing 652. The wire drive unit 654 is provided for each wire 651. In other words, one wire drive unit 654 is provided for one wire 651. The wire drive unit 654 is connected to the base end of the wire 651, which is the end portion of the wire 651 on a side not fixed to the tube body 63, via the wire load detection unit 655. The wire drive unit 654 can move the wire 651 toward and away from the pulley 653. For example, an electric slider, an electric cylinder, or a ball screw is used as the wire drive unit 654.

The wire load detection unit 655 is disposed between the base end of the wire 651 and the wire drive unit 654. The wire load detection unit 655 measures the load (wire tensile force) generated in the wire 651 and transmits the measurement result to the wire drive unit 654. When the measured result transmitted is equal to or larger than a value determined to be excessively large (a value that leads to a damage on the wire 651 for example), the wire drive unit 654 is driven to loosen the wire 651. When the measured result transmitted is equal to or smaller than a value determined to be excessively small (a value with which the wire 651 can be determined to be slack for example), the wire drive unit 654 is driven to tighten the wire 651 by amount resulting in the wire 651 being no longer loosened. The wire load detection unit 655 may be, for example, a load cell capable of directly measuring the load. Alternatively, the load may be indirectly measured based on the motor current value at the wire drive unit 654.

Furthermore, the posture actuator 65 drives a part of the plurality of tube bodies 63 that is disposed at a position close to the distal end. The tube body 63 driven by the posture actuator 65 may be one or a plurality of the tube bodies 63. As illustrated in FIG. 3, the tube 62 according to the present embodiment is divided into: an active portion 62A driven by the posture actuator 65; and a driven portion 62B that is not driven by the posture actuator 65.

In the active portion 62A, the wire 651 is fixed to the flange 632 of each of the tube bodies 63. The active portion 62A is a region of the tube 62, extending by a predetermined length from the distal end. Here, the predetermined length is an enough length to reach the desired inspection range.

The driven portion 62B is movable to follow a movement of the active portion 62A. In the driven portion 62B, the wire 651 is not fixed to the flange 632 of each of the tube bodies 63. The driven portion 62B is a region of the tube 62, extending between the base end and the active portion 62A. The driven portion 62B of the present embodiment is a region between the housing 652 and the active portion 62A.

The advancement/retraction actuator 67 is capable of advancing/retracting the tube 62. Here, the advancement/retraction of the tube 62 is a movement of the tube 62 in the tube extending direction. The advancement/retraction actuator 67 according to the present embodiment enables a movement of the housing 652 to which the tube 62 is fixed. The advancement/retraction actuator 67 includes a guide rail 672 and an advancement/retraction drive unit 671.

The advancement/retraction drive unit 671 moves on the guide rail 672. The housing 652 is fixed to the advancement/retraction drive unit 671. The advancement/retraction drive unit 671 is, for example, an electric slider. As the advancement/retraction drive unit 671 moves on the guide rail 672 toward the inspection target, the tube 62 is inserted deeper into inside the inspection target. On the other hand, as the advancement/retraction drive unit 671 moves on the guide rail 672 away from the inspection target, the tube 62 moves from the inside of the inspection target to the vicinity of the entrance thereof.

### Hardware Configuration of Control Device

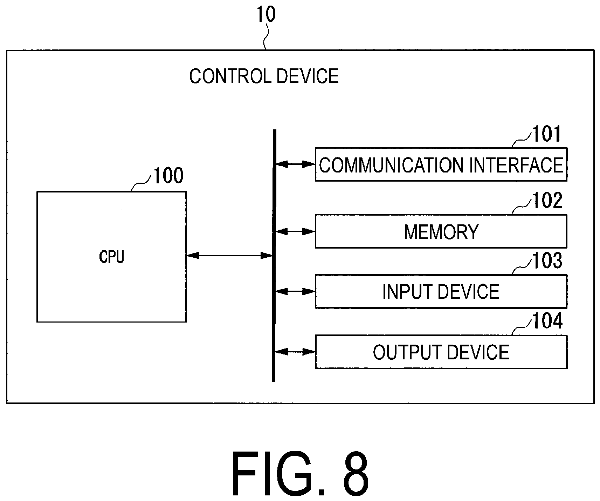

FIG. 8 is a diagram illustrating a hardware configuration of the control device according to the first embodiment.

As illustrated in FIG. 8, the control device 10 includes a CPU 100, a communication interface 101, a memory 102, an input device 103, and an output device 104.

The CPU 100 operates in accordance with a program prepared in advance to implement various functions, such as the path generating device 100A.

The communication interface 101 is, for example, a connection interface with the long flexible robot 6 and other terminal devices.

The memory 102 is what is known as a main storage device that provides a storage region required for processing executed by the CPU 100.

The input device 103 is, for example, a mouse, a keyboard, a touch sensor, or the like for receiving operations from an operator.

The output device 104 is a device, such as a display, a speaker, for outputting various types of information to the operator.

### Functional Configuration of Path Generating Device

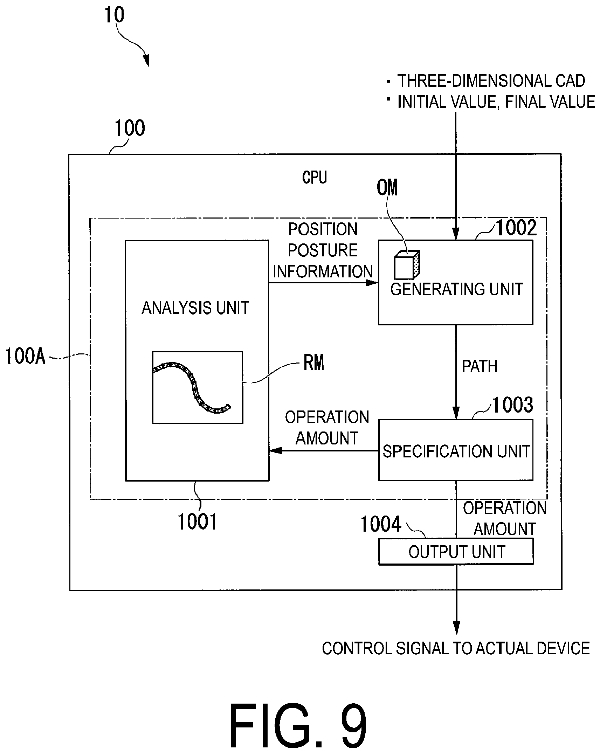

FIG. 9 is a diagram illustrating a functional configuration of the CPU according to the first embodiment. Next, the functions of the CPU 100 will be described with reference to FIG. 9.

As illustrated in FIG. 9, the CPU 100 includes an analysis unit 1001, a generating unit 1002, and a specification unit 1003, which are the functions of the path generating device 100A. Furthermore, the CPU 100 has a function of an output unit 1004.

The analysis unit 1001 uses a robot model RM that simulates, in a virtual space, the position and the posture of the long flexible robot 6 corresponding to an operation amount, to output position posture information indicating the position and the posture. The robot model RM may be constructed, for example, based on mechanistic analysis by Multibody Dynamics (MBD). In this case, the analysis unit 1001 acquires unique characteristics (such as rigidity, attenuation, and dimensions) of the actual long flexible robot 6 and constructs the robot model RM while taking the unique characteristics of the actual robot into consideration.

The analysis unit 1001 receives the operation amount from the specification unit 1003 described later. Specifically, the operation amount is the amount by which each of the wires 651 is pulled by the posture actuator 65 (the wire drive unit 654). The analysis unit 1001 inputs the operation amount to the robot model RM and, as a result, outputs the position and the posture (hereinafter, also referred to as "position posture information") of the long flexible robot 6 (robot model RM) as a whole simulated in the virtual space by mechanistic analysis.

The generating unit 1002 functions as what is known as a path planner that generates a path extending from a predetermined entry position to the target position in the virtual space. Specifically, first of all, the generating unit 1002 acquires a three-dimensional CAD indicating the shape of the inspection target and the surrounding environment. Then, the generating unit 1002 simulates the inspection target and the surrounding environment in the virtual space where the robot model RM exists. Hereinafter, the inspection target and the surrounding environment are also referred to as "obstacle", and the obstacle simulated in the virtual space is also referred to as "obstacle model OM".

Furthermore, the generating unit 1002 generates a path from the entry position to the target position in the virtual space so as to satisfy various conditions. The various conditions include the following:
(1) advancement satisfies mechanism constraint conditions (such as maximum curvature, wire operation amount, and wire tension) of the long flexible robot 6;
(2) advancement involves no impinging between the robot model RM and the obstacle model OM (predetermined distance is secured therebetween) at any section along the path; and
(3) the movement distance or movement time (working time) of the robot model RM is minimized.

Furthermore, the generating unit 1002 determines, based on the position posture information, whether the robot model RM, advancing along the path in accordance with the operation amount input, comes into contact with the obstacle model OM. In a case where the generating unit 1002 determines that the robot model RM comes into contact with the obstacle model OM, the generating unit 1002 modifies the generated path to prevent the robot model RM from coming into contact with the obstacle model OM. The meaning of this "determining whether the robot model RM comes into contact with the obstacle model OM" not only includes determining whether the robot model RM has actually come into contact with the obstacle model OM (whether the distance has decreased to 0) but also includes determining whether the distance between the robot model RM and the obstacle model OM has decreased to or below a distance threshold defined in advance.

The specification unit 1003 specifies an operation amount to be input to the robot model RM. Specifically, the specification unit 1003 specifies an operation amount for making the robot model RM advance along the path, while making the positions of the connection portions L (FIG. 2) of the units U of the robot model RM match the path generated by the generating unit 1002.

Here, the specification unit 1003 outputs, as time history, the operation amount for each step of advancement of the robot model RM from the entry position to the target position.

The output unit 1004 outputs the time history of the operation amount specified by the processing of the analysis unit 1001, the generating unit 1002, and the specification unit 1003, as a control signal to the actual long flexible robot 6.

Note that in the present embodiment, a single CPU 100 being in charge of the function of the path generating device has been described. However, other embodiments are not limited to this aspect. Other embodiments may be in an aspect in which, for example, a plurality of IC chips having functions respectively corresponding to the analysis unit 1001, the generating unit 1002, and the specification unit 1003 described above may cooperate to function as the path generating device.

### Processing Flow of CPU

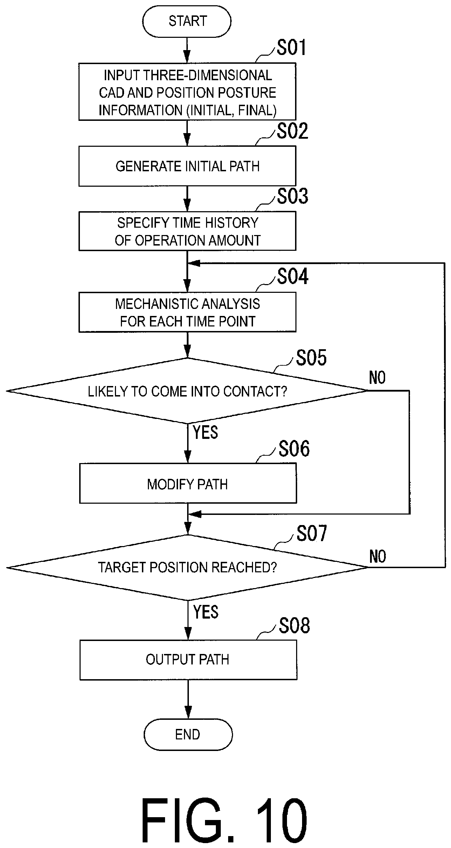

FIG. 10 is a diagram illustrating a processing flow of the CPU according to the first embodiment.

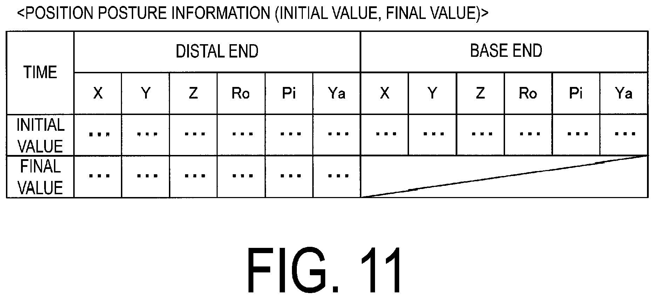

FIGS. 11 to 14 are diagrams illustrating an example of data handled by the CPU according to the first embodiment.

A flow of processing executed by the CPU 100 will be described in detail below with reference to FIGS. 10 to 14.

First of all, the generating unit 1002 receives: the three-dimensional CAD indicating the position and shape of the obstacle; and the initial value and the final value related to the position and the posture of the long flexible robot 6 (step S01).

FIG. 11 illustrates examples of the initial value and the final value input to the generating unit 1002. As illustrated in FIG. 11, as the initial value, the position (X, Y, Z) and posture (Ro, Pi, Ya) of the distal end and the base end of the long flexible robot 6 are defined. The position (X, Y, Z) is information indicating a position in the virtual space, and the posture (Ro, Pi, Ya) is information indicating the posture (roll, pitch, yaw) at the position (X, Y, Z) in the virtual space.

Similarly, as the final value, the position (X, Y, Z) and the posture (Ro, Pi, Ya) of the distal end of the long flexible robot 6 are defined as the final value.

The positions (X, Y, Z) and postures (Ro, Pi, Ya) defined as the initial value respectively indicate the entry position of the distal end (sensor 612) of the long flexible robot 6 and the posture to be taken by the distal end of the long flexible robot 6 at the entry position. The positions (X, Y, Z) and postures (Ro, Pi, Ya) defined as the final value respectively indicate the target position to be reached by the distal end (sensor 612) of the long flexible robot 6 and the posture to be taken by the distal end of the long flexible robot 6 at the target position.

Referring back to FIG. 10, the generating unit 1002 generates an initial path based on the three-dimensional CAD as well as the initial value and the final value (FIG. 11) input thereto (step S02). The path (initial path) generated by the generating unit 1002 is generated to extend between the entry position and the target position while satisfying the conditions (1) to (3) described above.

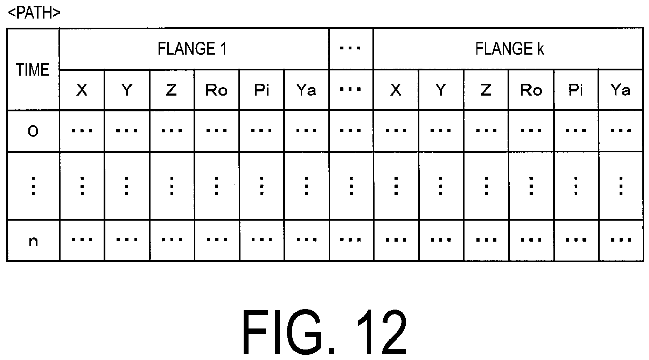

The path (initial path) generated by the generating unit 1002 is specifically represented by the time history of the position and the posture of each connection portion L of the long flexible robot 6. Specifically, as illustrated in FIG. 12, the generating unit 1002 generates, as a "path", information indicating the time history of the position (X, Y, Z) and the posture (Ro, Pi, Ya) for each connection portion L (flange 1, flange 2, ...) of the long flexible robot 6.

Referring back to FIG. 10, the specification unit 1003 receives the path (FIG. 12) generated by the generating unit 1002 and specifies the time history of the operation amount corresponding to this path (step S03).

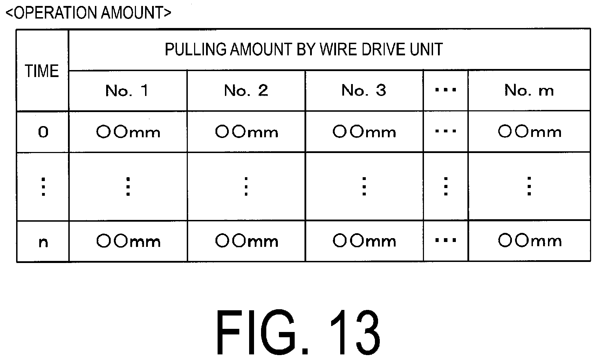

FIG. 13 illustrates an example of the operation amount specified by the specification unit 1003. As illustrated in FIG. 13, the specification unit 1003 specifies the time history of the respective amount (xx mm) of pulling by a plurality of the wire drive units 654 (No. 1, No. 2, ...). The amount of pulling by each of the wire drive units 654 thus specified is an operation amount for making the position and the posture of each connection portion L of the long flexible robot 6 match the position and the posture indicated on the path received from the generating unit 1002. Thus, if the specification unit 1003 sequentially inputs the time history (FIG. 13) of the operation amount specified by the specification unit 1003 to the long flexible robot 6, ideally, the long flexible robot 6 can advance with at least the position and the posture of each connection portion L matching the position and the posture indicated on the path (FIG. 12) at each time point.

Next, the analysis unit 1001 receives the operation amount (FIG. 13) specified by the specification unit 1003 for each time point and applies the operation amount to the robot model RM prepared in advance. Then, using the robot model RM, the analysis unit 1001 simulates, in the virtual space, the position and the posture of the long flexible robot 6 as a whole that are to be realized if the same operation amount is input to the actual long flexible robot 6 (step S04). Then, the analysis unit 1001 outputs position posture information of the robot model RM simulated in the virtual space. The "position posture information" is information indicating the position and the posture of the robot model RM as a whole obtained as a result of performing mechanistic analysis for a case where a certain operation amount is input to the robot model RM. Thus, by referring to this position posture information, the position and the posture of the robot model RM at any section in the virtual space can be recognized.

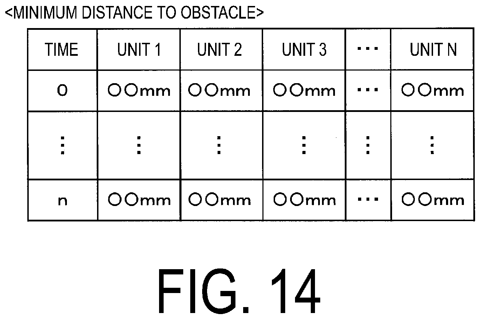

Referring back to FIG. 10, the generating unit 1002 receives position posture information from the analysis unit 1001 and determines whether the robot model RM indicated by the positional position information is likely to come into contact with the obstacle model OM (step S05). Here, the generating unit 1002 acquires information such as that illustrated in FIG. 14, for example.

Information table illustrated in FIG. 14 is time history of the minimum distance between each unit forming the robot model RM and the obstacle model. As illustrated in FIG. 14, the generating unit 1002 refers to the position posture information input from the analysis unit 1001 to calculate the minimum distance to the obstacle, per each unit of the robot model RM. The minimum distance is obtained by calculating the distances to the obstacle from all sections of the unit as a whole and by selecting the smallest value thereof.

In step S05, the generating unit 1002 determines whether the minimum distance calculated at a certain time point (FIG. 14) falls below a predetermined threshold.

Referring back to FIG. 10, when the minimum distance calculated at a certain time point falls below the predetermined threshold (step S05; YES), the generating unit 1002 modifies the path subsequently to be applied to the robot model RM at and after the time point.

For example, in FIG. 14, it is assumed that the minimum distance of a "unit 1" has fallen below a threshold value at a certain time point i. In this case, the generating unit 1002 modifies information on the current path (FIG. 12) for a time point i+1 and after. Specifically, the generating unit 1002 modifies the path for the time point i+1 and after in a direction to increase the minimum distance of the "unit 1".

When the minimum distance calculated at a certain time point does not fall below the predetermined threshold (step S05; NO), the generating unit 1002 proceeds to the next step without modifying the current path.

Next, the generating unit 1002 determines whether the distal end of the robot model RM has reached the target position (step S07). When the distal end of the robot model RM has not reached the target position (step S07; NO), the analysis unit 1001, the generating unit 1002, and the specification unit 1003 repeat the processing in steps S04 to S07 for the next time point.

When the distal end of the robot model RM has reached the target position (step S07; YES), the output unit 1004 outputs the time history of the operation amount to be input to the long flexible robot 6 (step S08). The time history of the operation amount output by the output unit 1004 is output, for example, as a control signal to the actual long flexible robot 6.

### (Operational Effects)

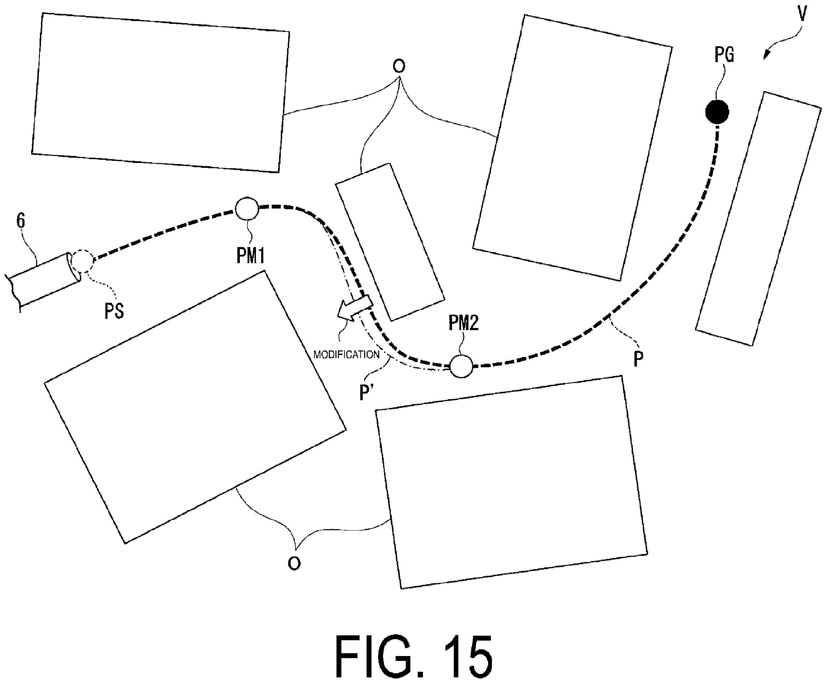

Operational effects obtained by executing the processing flow described above will be described with reference to FIG. 15.

FIG. 15 illustrates obstacles O and the long flexible robot 6 provided on a real space V, as well as an initial path P generated by the generating unit 1002. The initial path P is a path extending between an entry position PS and a target position PG to prevent the "connection portion L" of the long flexible robot 6 from coming into contact with the obstacle O. At the point when the distal end (sensor 612) of the long flexible robot 6 has reached the target position PG, the position and the posture of the long flexible robot 6 as a whole matches the initial path P. Still, the position and the posture of the long flexible robot 6 as a whole do not necessarily match the initial path, while the advancement of the long flexible robot 6 along the path is in progress. The reason for this will be described in detail below.

For example, it is assumed that at a certain time point while the advancement is in progress, one connection portion L is located at a position PM1 on the initial path P, and another connection portion L adjacent to the one connection portion L is positioned at a position PM2 on the initial path P. Here, the path between the position PM1 and the position PM2 forms a gently curved S shape (a shape as a combination of two curvatures). However, as described above, the constraint that one unit can be only be bent to have a single curvature is imposed on the long flexible robot 6. Thus, one unit U extending from the position PM1 to the position PM2 cannot be bent to completely match the initial path P. When the initial path P includes a region having a length corresponding to one unit and having two or more types of curvatures, the long flexible robot 6 is at least partially deviated from the initial path P while it advances in the region.

For this reason, while advancing in the inspection target, it has been difficult to recognize the actual state of the position and the posture of the long flexible robot 6, other than the connection portion L.

To address this problem, the path generating device (CPU 100) according to the present embodiment uses the robot model RM with which how the long flexible robot 6 is driven can be simulated in the virtual space. Thus, the position and the posture of the long flexible robot 6 as a whole at each time point can be recognized while the advancement along the path is in progress. As a result, whether a contact with the obstacle O is made can be determined in the virtual space, so that the path on which the advancing long flexible robot 6 as a whole does not come into contact with the obstacle O can be generated.

For example, when the robot model RM is likely to come into contact with the obstacle model OM while the robot model RM is advancing along the initial path P from the position PM1 to the position PM2, the path generating device according to the present embodiment can immediately modify the subsequent initial path P to generate a new path P' (FIG. 15) capable of avoiding contact.

According to the path generating device according to the first embodiment, the long flexible robot can be prevented from impinging upon the obstacle.

### Second Embodiment

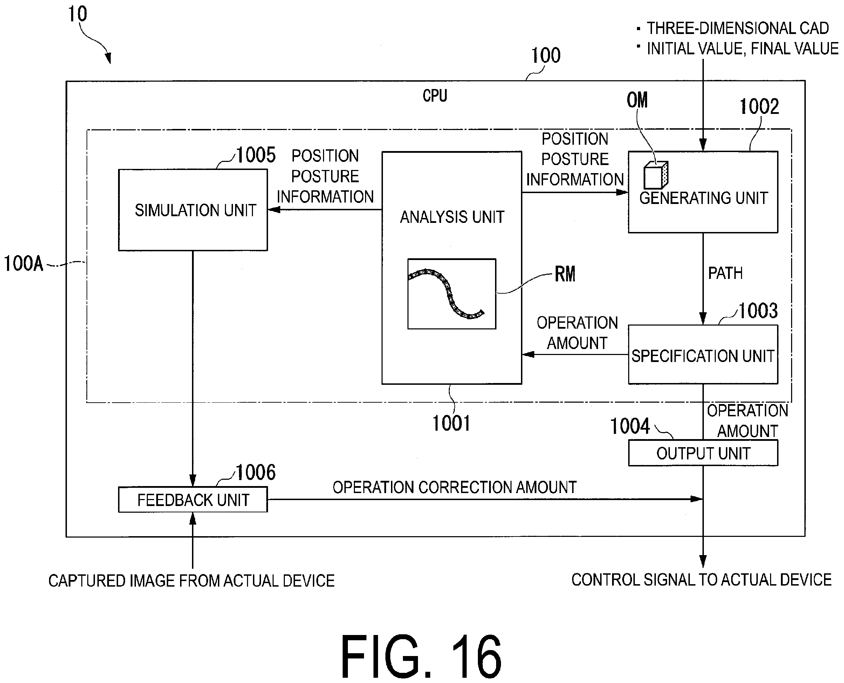

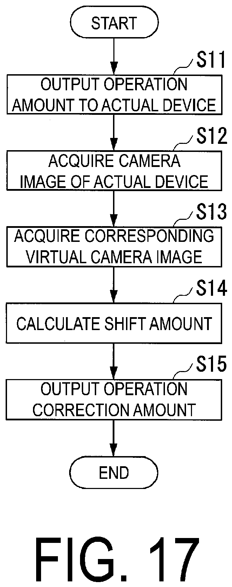

Next, a path generating device according to a second embodiment and an inspection system including the same will be described with reference to FIGS. 16 and 17.

### Functional Configuration of CPU

FIG. 16 is a diagram illustrating a functional configuration of the CPU according to the second embodiment.

As illustrated in FIG. 16, the CPU 100 according to the second embodiment has functions of a simulation unit 1005 and a feedback unit 1006 in addition to the configuration of the first embodiment.

Based on the position posture information output from the analysis unit 1001, the simulation unit 1005 simulates an image of the virtual space captured by a virtual camera attached to the robot model RM.

The feedback unit 1006 corrects the operation amount to be input to the long flexible robot 6, in accordance with a result of comparison between a detection signal acquired from the actual long flexible robot 6 and a detection signal simulated by the robot model RM. Here, in the present embodiment, the "detection signal acquired from the actual long flexible robot 6" is an image of the real space captured by the camera (sensor 612) attached to the distal end of the long flexible robot 6. Furthermore, in the present embodiment, the "detection signal simulated by the robot model RM" is an image of the virtual space simulated by the simulation unit 1005.

### Processing Flow of CPU

FIG. 17 is a diagram illustrating a processing flow of the CPU according to the second embodiment.

The processing flow illustrated in FIG. 17 is repeatedly executed while the control device 10 is controlling the actual long flexible robot 6.

The output unit 1004 outputs, as a control signal for the actual long flexible robot 6, the operation amount generated through the processing flow (FIG. 10) according to the first embodiment (step S11). The actual long flexible robot 6 advances inside the inspection target, with each unit U bending in accordance with the operation amount input from the output unit 1004.

Then, the feedback unit 1006 acquires an image captured by the sensor 612 of the actual long flexible robot 6 (step S12).

Meanwhile, the analysis unit 1001 inputs to the robot model RM in the virtual space, the operation amount that is the same as the operation amount for the actual long flexible robot 6. As a result, the robot model RM advances inside the inspection target while bending, in the virtual space, in the same manner as the actual long flexible robot 6. In this process, the simulation unit 1005 simulates the image in the virtual space captured by the virtual camera attached to the distal end of the robot model RM. The feedback unit 1006 acquires the image simulated by the simulation unit 1005 (step S13).

Then, the feedback unit 1006 compares the image from the actual long flexible robot 6 acquired in step S12 with the image acquired in step S13 and calculates the shift amount between the position and the posture of the distal end of the actual long flexible robot 6 in the real space and the position and the posture of the distal end of the robot model RM in the virtual space (step S14).

Specifically, the feedback unit 1006 extracts a plurality of feature points from each of the images and calculates the shift amount, by comparing the images based on the positional relationship between common feature points.

Based on the shift amount calculated in step S14, the feedback unit 1006 outputs an operation correction amount to make the position and the posture of the long flexible robot 6 in the real space match the position and the posture of the robot model RM in the virtual space (step S15).

### Operational Effects

The control device 10 according to the second embodiment performs control while correcting the shift between the robot model RM and the long flexible robot 6, based on the detection signals (images) respectively acquired from the long flexible robot 6 and the robot model RM. With this configuration, the actual long flexible robot 6 can more accurately advance along the path defined in the virtual space.

In the second embodiment, the feedback unit 1006 described above calculates the shift amount in the position and the posture between the long flexible robot 6 and the robot model RM by using the images acquired from these, as the detection signals. However, other embodiments are not limited to this aspect.

For example, the feedback unit 1006 according to other embodiments may calculate the shift amount in the position and the posture between the long flexible robot 6 and the robot model RM by using an amount of difference in wire tension between these, as the detection signals.

The control device 10 according to another embodiment may further have the following functions.

For example, the control device 10 may include a determination unit that determines whether there is an abnormality/sign (such as foreign matter, burning, or tearing) in the actual image (video). In this case, upon determining that there is an abnormality/sign, the determination unit ends the inspection and outputs an alarm indicating the abnormality/sign.

Furthermore, the inspection system 1 may move the long flexible robot 6 that has reached the target position from the entry position and has completed the inspection, to a position different from the entry position (for example, an outlet provided at a position different from the entry position).

The control device 10 according to the first embodiment is described to be in an aspect of: incorporating the path generating device 100A therein; and outputting, as the control signal, an operation amount corresponding to the path generated by the path generating device 100A to the long flexible robot 6. However, other embodiments are not limited to this aspect. For example, the path generating device 100A may be configured separately from the control device 10 to be independently provided. In this case, the path generating device 100A may display the generated path to the operator.

### Third Embodiment

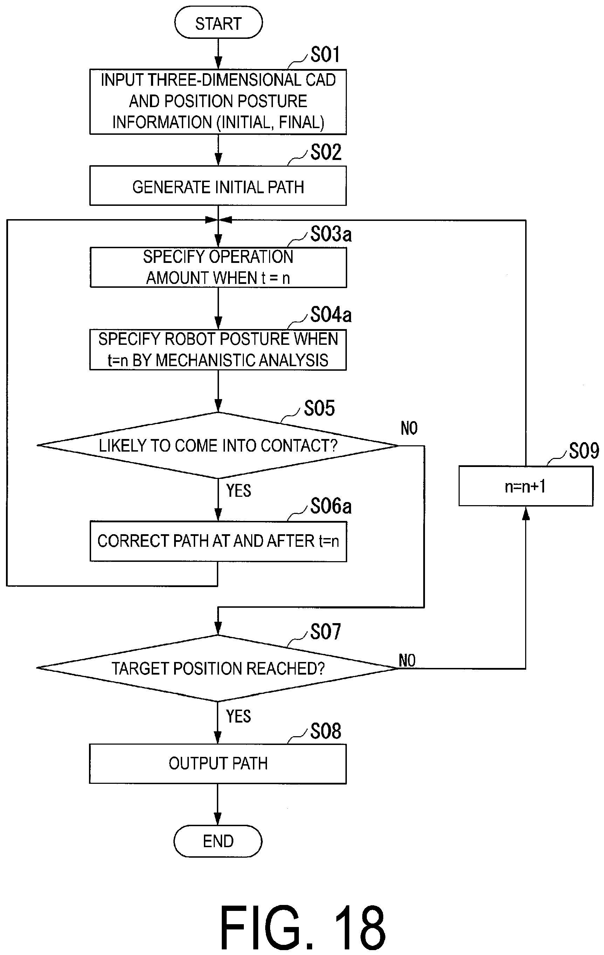

Next, a path generating device according to a third embodiment and an inspection system including the same will be described with reference to FIG. 18.

### Processing Flow of CPU

FIG. 18 is a diagram illustrating a processing flow of the CPU according to the third embodiment.

The path generating device 100A according to the first embodiment generates a unique target path, whereas the path generating device 100A according to the present embodiment generates a target path for each time history (t = 1, 2, ...).

As illustrated in FIG. 18, the path generating device 100A according to the present embodiment performs steps S03a, S04a, and S06a instead of steps S03, S04, and S06 in the first embodiment (FIG. 10), and further performs step S09. The processing in these steps will be described in detail below.

In step S03a, the specification unit 1003 receives the path (FIG. 12) generated by the generating unit 1002 and specifies the operation amount at a certain time point t = n.

Next, the analysis unit 1001 receives the operation amount specified by the specification unit 1003 for the time point t = n, and applies the operation amount to the robot model RM prepared in advance. Then, using the robot model RM, the analysis unit 1001 specifies, in the virtual space, the position and the posture of the entire long flexible robot 6 at the time point t = n (step S04a). Then, the analysis unit 1001 outputs position posture information of the robot model RM simulated in the virtual space.

Thereafter, when it is determined in step S05 that the minimum distance between the robot model RM and the obstacle model OM at the time point t = n falls below a predetermined threshold (step S05; YES), the path (initial path) at and after the time point t = n is modified (step S06a). In this case, the path generating device 100A returns to step S03a to specify, based on the modified path, the operation amount at the time point t = n.

On the other hand, when it is determined in step S05 that the minimum distance between the robot model RM and the obstacle model OM at the time point t = n does not fall below the predetermined threshold (step S05; NO), the generating unit 1002 determines whether the distal end of the robot model RM has reached the target position (step S07). When the distal end of the robot model RM has not reached the target position (step S07; NO), the analysis unit 1001, the generating unit 1002, and the specification unit 1003 return to the processing in step S03a for the next time point (step S09).

In the embodiment described above, the process of processing executed by the CPU 100 including the path generating device 100A are stored in a computer readable recording medium in the form of a program, and these various processes are implemented by the computer reading out and executing this program. Examples of the computer-readable recording medium include magnetic disks, magneto-optical disks, CD-ROMs, DVD-ROMs, and semiconductor memories. Also, this computer program may be distributed to the computer on a communication circuit, and the computer that receives this distribution may execute the program.

The program may be a program for realizing part of the functions described above. In addition, the functions as described above may be realized in combination with a program already stored on the computer system, namely, a so-called differential file (differential program).

In the foregoing, certain embodiments of the disclosure have been described, but all of these embodiments are merely illustrative and are not intended to limit the scope of the invention. These embodiments may be implemented in various other forms, and various omissions, substitutions, and alterations may be made without departing from the gist of the invention. These embodiments and modifications are included in the scope and gist of the invention and are also included in the scope of the invention described in the claims and equivalents thereof.

### Notes

The path generating device 100A, the control device 10, and the inspection system 1 according to each of the embodiments are construed, for example, in the following manner.
(1) A path generating device 100A according to a first aspect is configured to generate a path for a long flexible robot 6 formed by connecting a plurality of units U that are each bendable to have a desired single curvature, and the path generating device 100A includes: an analysis unit 1001 configured to output position posture information indicating a position and a posture of the long flexible robot 6 corresponding to an operation amount, using a robot model RM with which the position and the posture are able to be simulated in a virtual space; a generating unit 1002 configured to generate a path extending from a predetermined entry position to a target position in the virtual space; and a specification unit 1003 configured to specify an operation amount for making the robot model RM advance along the path, while making a position of a connection portion L of each of the units U of the robot model RM match the path.
   The generating unit 1002 determines whether the robot model RM advancing along the path in response to the operation amount input comes into contact with an obstacle model OM, based on the position posture information, and, upon determining that the contact occurs, modifies the path to prevent the robot model from coming into contact with the obstacle model OM.
(2) With the path generating device 100A according to a second aspect, the generating unit 1002 modifies the path when a minimum distance between the robot model RM advancing in the virtual space and the obstacle model OM falls below a threshold.
(3) With the path generating device 100A according to a third aspect, when the minimum distance between the robot model RM advancing in the virtual space and the obstacle model OM falls below the threshold at a certain time point, the generating unit 1002 modifies the path at and after the time point.
(4) The path generating device 100A according to a fourth aspect further includes a simulation unit 1005 configured to simulate an image captured by a camera attached to the robot model RM in the virtual space.
(5) A control device 10 according to a fifth aspect includes the above-described path generating device 100A; and an output unit 1004 configured to output the operation amount to the long flexible robot.
(6) The control device 10 according to a sixth aspect further includes a feedback unit 1006 configured to correct the operation amount to be input to the long flexible robot 6, in accordance with a result of comparison between a detection signal acquired from the long flexible robot 6 and a detection signal simulated by the robot model RM.
(7) The control device 10 according to a seventh aspect further includes a determination unit configured to determine whether there is an abnormality or a sign in an actual image captured from the long flexible robot 6.
(8) An inspection system 1 according to an eighth aspect includes the above-described control device, and the long flexible robot 6.
(9) A path generating method according to a ninth aspect is a path generating method for generating a path for a long flexible robot 6 formed by connecting a plurality of units U that are each bendable to have a desired single curvature, the path generating method including: outputting position posture information indicating a position and a posture of the long flexible robot 6 corresponding to an operation amount, using a robot model RM with which the position and the posture are able to be simulated in a virtual space; generating a path extending from a predetermined entry position to a target position in the virtual space; and specifying an operation amount for making the robot model RM advance along the path, while making a position of a connection portion L of each of the units U of the robot model RM match the path.
   The generating of the path includes: determination whether the robot model RM advancing along the path in response to the operation amount input comes into contact with an obstacle model OM based on the position posture information, and, upon determination that the contact occurs, modification of the path is modified to prevent the robot model from coming into contact with the obstacle model OM.
(10) A program according to a tenth aspect causes a computer of a path generating device configured to generate a path for a long flexible robot 6 formed by connecting a plurality of units U that are each bendable to have a desired single curvature to perform outputting position posture information indicating a position and a posture of the long flexible robot 6 corresponding to an operation amount, using a robot model RM with which the position and the posture are able to be simulated in a virtual space; generating a path extending from a predetermined entry position to a target position in the virtual space; and specifying an operation amount for making the robot model RM advance along the path, while making a position of a connection portion L of each of the units U of the robot model RM match the path.

The generating of the path includes: determination whether the robot model RM advancing along the path in response to the operation amount input comes into contact with an obstacle model OM, based on the position posture information, and, upon determination that the contact occurs, modification of the path is modified to prevent the robot model from coming into contact with the obstacle model OM.

### Reference Signs List

- 1.: Inspection system
- 10: Control device
- 100: CPU
- 100A: Path generating device
- 1001: Analysis unit
- 1002: Generating unit
- 1003: Specification unit
- 1004: Output unit
- 1005: Simulation unit
- 1006: Feedback unit
- 101: Communication interface
- 102: Memory
- 103: Input device
- 104: Output device
- 6: Long flexible robot
- 61: Inspection cable
- 611: Cable body
- 612: Sensor
- 62: Tube
- 62A: Active portion
- 62B: Driven portion
- 63: Tube body
- 631: Cylindrical portion
- 632: Flange
- 633: Wire insertion hole
- 65: Posture actuator
- 651: Wire
- 652: Housing
- 653: Pulley
- 654: Wire drive unit
- 655: Wire load detection unit
- 67: Advancement/retraction actuator
- 671: Advancement/retraction drive unit
- 672: Guide rail

## Claims

1. A path generating device configured to generate a path for a robot formed by connecting a plurality of units that are each bendable to have a desired single curvature, the path generating device comprising:
an analysis unit configured to output position posture information indicating a position and a posture of the robot corresponding to an operation amount, using a robot model with which the position and the posture are able to be simulated in a virtual space;
a generating unit configured to generate a path extending from a predetermined entry position to a target position in the virtual space; and
a specification unit configured to specify an operation amount for making the robot model advance along the path, while making a position of a connection portion of each of the units of the robot model match the path, wherein
the generating unit determines whether the robot model advancing along the path in response to the operation amount input comes into contact with an obstacle model, based on the position posture information, and, upon determining that the contact occurs, modifies the path to prevent the robot model from coming into contact with the obstacle model.

2. The path generating device according to claim 1, wherein the generating unit modifies the path when a minimum distance between the robot model advancing in the virtual space and the obstacle model falls below a threshold.

3. The path generating device according to claim 2, wherein when the minimum distance between the robot model advancing in the virtual space and the obstacle model falls below the threshold at a certain time point, the generating unit modifies the path at and after the time point.

4. The path generating device according to any one of claims 1 to 3 further comprising a simulation unit configured to simulate an image captured by a camera attached to the robot model in the virtual space.

5. A control device comprising:
the path generating device described in any one of claims 1 to 4; and
an output unit configured to output the operation amount to the robot.

6. The control device according to claim 5 further comprising a feedback unit configured to correct the operation amount to be input to the robot, in accordance with a result of comparison between a detection signal acquired from the robot and a detection signal simulated by the robot model.

7. The control device according to claim 5 or 6 further comprising a determination unit configured to determine whether there is an abnormality or a sign in an actual image captured from the robot.

8. An inspection system comprising:
the control device described in any one of claims 5 to 7; and
the robot.

9. A path generating method for generating a path for a robot formed by connecting a plurality of units that are each bendable to have a desired single curvature, the path generating method comprising:
outputting position posture information indicating a position and a posture of the robot corresponding to an operation amount, using a robot model with which the position and the posture are able to be simulated in a virtual space;
generating a path extending from a predetermined entry position to a target position in the virtual space; and
specifying an operation amount for making the robot model advance along the path, while making a position of a connection portion of each of the units of the robot model match the path, wherein
the generating of the path comprises: determination whether the robot model advancing along the path in response to the operation amount input comes into contact with an obstacle model, based on the position posture information, and, upon determination that the contact occurs, modification of the path to prevent the robot model from coming into contact with the obstacle model.

10. A program causing a computer of a path generating device configured to generate a path for a robot formed by connecting a plurality of units that are each bendable to have a desired single curvature to perform:
outputting position posture information indicating a position and a posture of the robot corresponding to an operation amount, using a robot model with which the position and the posture are able to be simulated in a virtual space;
generating a path extending from a predetermined entry position to a target position in the virtual space; and
specifying an operation amount for making the robot model advance along the path, while making a position of a connection portion of each of the units of the robot model match the path, wherein
the generating of the path comprises: determination whether the robot model advancing along the path in response to the operation amount input comes into contact with an obstacle model, based on the position posture information, and, upon determination that the contact occurs, modification of the path to prevent the robot model from coming into contact with the obstacle model.
